# EUROPÄISCHE PATENTANMELDUNG

(11) **EP 3 573 154 A1**
(43) Veröffentlichungstag der Anmeldung: **27.11.2019**
(21) Anmeldenummer: 19172291.7
(22) Anmeldetag: 02.05.2019
(51) Int. Cl.: H01M 4/139, G01B 11/00, H01M 10/04

(54) **VERFAHREN ZUR HERSTELLUNG EINES ELEKTRODENSTAPELS FÜR EINE ELEKTRISCHE ENERGIESPEICHEREINHEIT SOWIE ENTSPRECHENDE TRANSPORTVORRICHTUNG**

(30) Priorität: 24.05.2018 DE 102018208187
(71) Anmelder: Robert Bosch GmbH, 70442 Stuttgart (DE)
(72) Erfinder: Wolf, Dirk, 71272 Renningen (DE); Gossen, Bernhard, 71691 Freiberg Am Neckar (DE)

(57) **Zusammenfassung**

Es wird ein Verfahren zur Herstellung eines Elektrodenstapels für eine elektrische Energiespeichereinheit beschrieben, welches die folgenden Schritte umfasst:
a) Aufnehmen eines Elektrodenblattes (3, 13) mittels einer Transportvorrichtung (1, 11);
b) Ermitteln einer Lage des Elektrodenblattes (3, 13) auf der Transportvorrichtung (1, 11) mittels mindestens eines an oder in der Transportvorrichtung (1, 11) angebrachten Sensors (4, 5, 6, 14, 15, 16, 17, 18, 19);
c) Ablegen des Elektrodenblattes (3, 13) auf einem Elektrodenstapel, wobei eine Korrektur der Ablagelage des Elektrodenblattes (3, 13) auf dem Elektrodenstapel in Abhängigkeit der ermittelten Lage des Elektrodenblattes (3, 13) auf der Transportvorrichtung (1, 11) vorgenommen wird, um ein positionsgenaues Ablegen des Elektrodenblattes (3, 13) auf dem Elektrodenstapel zu ermöglichen.

Weiterhin werden eine entsprechende Transportvorrichtung (3, 13), ein entsprechendes Computerprogramm und ein entsprechendes maschinenlesbares Speichermedium beschrieben.

## Beschreibung

Die vorliegende Erfindung geht aus von einem Verfahren zur Herstellung eines Elektrodenstapels für eine elektrische Energiespeichereinheit sowie einer Transportvorrichtung zum Herstellen eines Elektrodenstapels gemäß dem Oberbegriff der unabhängigen Patentansprüche.

### Stand der Technik

Bei der Herstellung von elektrischen Energiespeichereinheiten, insbesondere Lithiumionenbatteriezellen oder Brennstoffzellen, werden verschiedene Verfahren eingesetzt. Eines dieser Verfahren ist das Stapeln einzelner beziehungsweise mehrerer Elektrodenblätter übereinander, im Englischen auch "Stacking" genannt. Dabei werden die angesaugten Elektrodenblätter mittels eines optischen Systems, welches an einem festen Standort positioniert ist, ausgemessen und anschließend entsprechend ihrer Lage auf der Ansaugeinheit auf den zu bildenden Stapel abgelegt. Dies bedingt gewisse Ungenauigkeiten bei der Stapelherstellung, sodass beispielsweise eine Positionierungenauigkeit im Bereich von 0,1 mm bis 0,3 mm auftritt. Diese Ungenauigkeit ist auch von den verwendeten Materialien abhängig.

Je genauer die Elektrodenblätter gestapelt werden können, desto positiver wirkt sich dies beispielsweise auf das Alterungsverhalten einer entsprechend hergestellten Batteriezelle aus. Durch eine homogenere Stromverteilung und geringere Lithiumablagerungen insbesondere an den Randbereichen der Batteriezellen kann eine leistungsfähigere Batteriezelle hergestellt werden.

In der Druckschrift JP 2015-210977 wird ein Verfahren beschrieben, welches die Fertigungszeit einer Elektrodenbaugruppe verringern kann. Dazu wird innerhalb des Verfahrens eine Saugvorrichtung und ein Lastsensor eingesetzt.

### Offenbarung der Erfindung

### Vorteile der Erfindung

Offenbart wird ein Verfahren zur Herstellung eines Elektrodenstapels für eine elektrische Energiespeichereinheit sowie eine Transportvorrichtung zum Herstellen eines Elektrodenstapels mit den kennzeichnenden Merkmalen der unabhängigen Patentansprüche.

Dabei wird ein Elektrodenblatt, das heißt ein mit Aktivmaterial beschichtetes Blatt, insbesondere eine Folie, mittels einer Transportvorrichtung, welche beispielsweise als Ansaugeinheit ausgebildet sein kann, aufgenommen.

Anschließend wird eine Lage des Elektrodenblattes auf der Transportvorrichtung mittels mindestens eines an oder in der Transportvorrichtung angebrachten Sensors ermittelt.

Danach wird das Elektrodenblatt auf einem Elektrodenstapel abgelegt, wobei eine Korrektur der Ablagelage des Elektrodenblattes in Abhängigkeit der ermittelten Lage des Elektrodenblattes auf der Transportvorrichtung vorgenommen wird, um ein positionsgenaues Ablegen des Elektrodenblattes auf dem Elektrodenstapel zu ermöglichen. Je nach Lage des Elektrodenblattes auf der Transportvorrichtung werden dazu von der Transportvorrichtung entsprechende Korrekturbewegungen in translatorischer und/oder rotatorischer Richtung vorgenommen. Diese Korrekturbewegungen können während des Ablagevorganges beziehungsweise während eines vorangehenden Transportvorganges durchgeführt werden.

Ebenso können mehrere Elektrodenblätter anstatt eines Elektrodenblattes im Rahmen des beschriebenen Verfahrens gehandhabt werden. Dabei kann eine Korrektur der Ablagelage für die Gesamtheit der mehreren Elektrodenblätter erfolgen. Dies kann die Herstellungszeit des Elektrodenstapel verkürzen.

Das beschriebene Verfahren hat den Vorteil, dass die Positionsgenauigkeit bei der Stapelherstellung, d.h. beim Übereinanderlegen der einzelnen Elektrodenblätter, verbessert wird. Somit erhöht das beschriebene Verfahren die Leistungsfähigkeit der damit hergestellten elektrischen Energiespeichereinheiten und verbessert gleichzeitig deren Alterungsverhalten. Durch die Integration des mindestens einen Sensors an beziehungsweise in die Transportvorrichtung kann vorteilhafter Weise auf ein externes optisches System verzichtet werden, was eine größere Flexibilität bei der Gestaltung des Herstellungsprozesses für die elektrische Energiespeichereinheit ermöglicht und die Zykluszeit beziehungsweise die Herstellungszeit eines Elektrodenstapels verkürzt. Gleichzeitig wird durch diesen Verzicht die Robustheit des Herstellungsverfahrens erhöht, da sich externe Einflüsse weniger stark auf die Lageermittlung des Elektrodenblattes auswirken.

Weitere vorteilhafte Ausführungsformen der vorliegenden Erfindung sind Gegenstand der Unteransprüche.

Zweckmäßigerweise umfasst der Schritt des Ermittelns der Lage des Elektrodenblattes ein Ermitteln einer Lage mindestens einer Kante des Elektrodenblattes auf der Transportvorrichtung mittels mindestens zweier an oder in der Transportvorrichtung angebrachter Sensoren. Dies ist vorteilhaft, da Elektrodenblätter typischerweise eine rechteckige Form haben. Somit kann aus der Kenntnis der Lage der Kante des Elektrodenblattes ein entsprechender Korrekturwert für den Schritt des Ablegens des Elektrodenblattes auf dem Elektrodenstapel ermittelt werden, wodurch ein positionsgenaues Ablegen ermöglicht wird.

Vorteilhafterweise ist der Sensor als Zeilensensor ausgebildet, welcher beispielsweise 1x1024 Zeilen umfasst. Somit ist eine kostengünstige Umsetzung des Verfahrens möglich.

Zweckmäßigerweise wird die Lage mindestens zweier Kanten des Elektrodenblattes ermittelt, wobei dies mittels mindestens dreier nicht auf einer Gerade liegenden, an oder in der Transportvorrichtung angebrachter Sensoren durchgeführt wird. Dies ist vorteilhaft, da somit zur Korrektur der Ablagelage weitere Positionsinformationen vorliegen, wodurch eine umfassendere Korrektur der Ablagelage ermöglicht wird. Beispielsweise kann eine Korrektur bezüglich der Ablagelage zweier Kanten des Elektrodenblattes durchgeführt werden. Dabei können die mindestens drei Sensoren als Zeilensensor ausgebildet sein.

Zweckmäßigerweise wird aus der ermittelten Lage des Elektrodenblattes auf der Transportvorrichtung eine Verdrehung des Elektrodenblattes ermittelt. Die ermittelte Verdrehung des Elektrodenblattes kann anschließend zur Korrektur der Ablagelage des Elektrodenblattes auf dem Elektrodenstapel eingesetzt werden. Somit ist in vorteilhafter Weise ein äußerst positionsgenaues Ablegen auf dem Elektrodenstapel möglich. Eine Kombination von translatorischer und rotatorischer Korrektur der Ablagelage des Elektrodenblattes auf dem Elektrodenstapel ist dabei besonders vorteilhaft, da dies eine Korrektur bezüglich dreier räumlicher Freiheitsgrade ermöglicht.

Zweckmäßigerweise wird das Elektrodenblatt in Abhängigkeit der ermittelten Verdrehung so abgelegt, dass eine Lageabweichung zwischen dem Elektrodenblatt und einem weiteren auf dem Elektrodenstapel bereits vorhandenen Elektrodenblatt - bevorzugt dem oben liegenden, das heißt dem zuletzt aufgelegten - minimiert wird. Dies hat den Vorteil, dass ein möglichst bündiges Ablegen des Elektrodenblattes auf dem weiteren Elektrodenblatt erzielt wird, was sich positiv auf Lebensdauer und elektrische Leistungsfähigkeit der aus dem Elektrodenstapel hergestellten elektrischen Energiespeichereinheit auswirkt.

Vorteilhafterweise wird bei der Korrektur der Ablagelage des Elektrodenblattes eine gezielte Gewichtung zwischen den verschiedenen translatorischen und rotatorischen Abweichungen vorgenommen. Diese Gewichtung kann beispieisweise in einem Kennfeld in einem Datenspeicher hinterlegt sein. Dies ist vorteilhaft, da die verschiedenen Abweichungen gegebenenfalls unterschiedlich starke Auswirkungen auf das Alterungsverhalten beziehungsweise das Leistungsverhalten der elektrischen Energiespeichereinheit haben und somit gezielt eine bestimmte Auswirkung minimiert werden kann.

Zweckmäßigerweise umfasst der Schritt des Aufnehmens des Elektrodenblattes mittels einer Transportvorrichtung ein Ansaugen des Elektrodenblattes durch die Transportvorrichtung. Zu diesem Zweck kann die Transportvorrichtung beispielsweise eine Saugeinheit aufweisen, welche zum Ansaugen des Elektrodenblattes einen Unterdruck beziehungsweise ein Vakuum erzeugt. Dies ist vorteilhaft, da dadurch ein schonendes, die Funktionalität des Elektrodenblattes nicht negativ beeinflussendes Transportieren des Elektrodenblattes möglich ist.

Weiterhin ist Gegenstand der Offenbarung eine Transportvorrichtung zum Herstellen eines Elektrodenstapels, wobei die Transportvorrichtung eine Einheit zum Aufnehmen eines Elektrodenblattes umfasst, welche insbesondere als Saugeinheit ausgebildet ist beziehungsweise eine Saugeinheit umfasst, und wobei die Transportvorrichtung eine Einheit zum Ermitteln der Lage des Elektrodenblattes auf der Transportvorrichtung umfasst. Dies ist vorteilhaft, da die offenbarte Transportvorrichtung insbesondere das offenbarte Verfahren durchführen kann und somit die oben genannten Vorteile realisiert.

Vorteilhafterweise ist die Transportvorrichtung als Sauggreifer ausgebildet.

Zweckmäßigerweise umfasst die Einheit zum Ermitteln der Lage des Elektrodenblattes einen Sensor, insbesondere einen Zeilensensor. Der Zeilensensor kann beispielsweise 1x1024 Zeilen aufweisen, wobei je nach Größe der Transportvorrichtung beziehungsweise der Einheit zum Aufnehmen eines Elektrodenblattes auch andere Größen möglich sind. Somit ist in vorteilhafter Weise eine einfache Lagebestimmung des Elektrodenblattes auf der Transportvorrichtung möglich.

Zweckmäßigerweise umfasst die Transportvorrichtung mindestens drei Sensoren, insbesondere drei Zeilensensoren, welche so angeordnet sind, dass sie nicht auf einer Gerade liegen. So kann die tatsächliche Lage des Elektrodenblattes an der Transportvorrichtung während des Transportvorganges präzise ermittelt werden.

Vorteilhafterweise sind die mindestens drei Sensoren derart an oder in der Transportvorrichtung platziert, dass zwei der Sensoren an zwei möglichst weit auseinanderliegenden Stellen eine erste Kantenlage einer ersten Kante des abzulegenden Elektrodenblattes ermitteln und ein dritter Sensor eine zweite Kantenlage einer zweiten Kante des abzulegenden Elektrodenblattes ermittelt, wobei die erste Kante und die zweite Kante aneinandergrenzen. Dies hat den Vorteil, dass zum einen ein translatorischer Versatz der ersten Kante auf Basis mindestens einer Messung der zwei Sensoren an der ersten Kante und zum anderen eine Verdrehung des Elektrodenblattes auf Basis mindestens einer Messung des dritten Sensors an der zweiten Kante ermittelt werden kann. Diese Informationen können anschließend in vorteilhafter Weise zur Korrektur der Ablagelage des Elektrodenblattes auf einem Elektrodenstapel eingesetzt werden.

Zweckmäßigerweise sind die Sensoren so angeordnet, dass sie mindestens zwei Kanten eines aufzunehmenden Elektrodenblattes erfassen, wobei sie besonders bevorzugt nicht gegenüberliegende Kanten erfassen. Somit wird in vorteilhafter Weise die Lage des Elektrodenblattes auf der Transportvorrichtung erfasst und kann anschließend zur Korrektur der Ablagelage des Elektrodenblattes auf einem Elektrodenstapel eingesetzt werden.

Zweckmäßigerweise ist der mindestens eine Sensor, welcher insbesondere als Zeilensensor ausgebildet sein kann, in einer Vertiefung auf einer das Elektrodenblatt aufnehmenden Seite der Transportvorrichtung angebracht. Dies hat den Vorteil, dass der mindestens eine Sensor keine Beeinträchtigung beim Aufnehmen eines Elektrodenblattes darstellt. Besonders vorteilhaft bildet der in der Vertiefung angebrachte Sensor mit seiner Umgebung eine plane Fläche, wodurch in vorteilhafter Weise eine unerwünschte Wölbung eines aufzunehmenden beziehungsweise aufgenommenen Elektrodenblattes verhindert wird.

Weiterhin ist Gegenstand der Offenbarung ein Computerprogramm, umfassend Befehle, die bewirken, dass die offenbarte Transportvorrichtung das offenbarte Verfahren ausführt. Es gelten die oben genannten Vorteile entsprechend.

Weiterhin ist Gegenstand der Offenbarung ein maschinenlesbares Speichermedium, auf dem das offenbarte Computerprogramm gespeichert ist. Es gelten die oben genannten Vorteile entsprechend.

Unter einer elektrischen Energiespeichereinheit kann insbesondere eine elektrochemische Batteriezelle verstanden werden. Zum Beispiel kann die elektrische Energiespeichereinheit eine lithiumbasierte Batteriezelle sein. Insbesondere kann die elektrische Energiespeichereinheit eine Lithium-Ionen-Batteriezelle sein. Weiterhin kann die Batteriezelle vom Typ Lithium-Polymer-Akkumulator, Nickel-Metallhydrid-Akkumulator, Blei-Säure-Akkumulator, Lithium-Luft-Akkumulator oder Lithium-Schwefel-Akkumulator beziehungsweise ganz allgemein ein Akkumulator beliebiger elektrochemischer Zusammensetzung sein. Auch ein Kondensator ist als elektrische Energiespeichereinheit möglich. Weiterhin kann das beschriebene Verfahren auch bei der Herstellung von Brennstoffzellen beziehungsweise Brennstoffzellenstapeln eingesetzt werden.

### Kurze Beschreibung der Zeichnungen

Vorteilhafte Ausführungsformen der Erfindung sind in den Figuren dargestellt und in der nachfolgenden Beschreibung näher ausgeführt.

Es zeigen:
- Figur 1: ein Flussdiagramm des offenbarten Verfahrens gemäß einer ersten Ausführungsform;
- Figur 2: ein Flussdiagramm des offenbarten Verfahrens gemäß einer zweiten Ausführungsform;
- Figur 3: eine erste schematische Darstellung der offenbarten Transportvorrichtung gemäß einer ersten Ausführungsform;
- Figur 4: eine zweite schematische Darstellung der offenbarten Transportvorrichtung gemäß der ersten Ausführungsform;
- Figur 5: eine schematische Darstellung eines Ausschnitts der offenbarten Transportvorrichtung gemäß der ersten Ausführungsform;
- Figur 6: eine erste schematische Darstellung der offenbarten Transportvorrichtung gemäß einer zweiten Ausführungsform;
- Figur 7: eine zweite schematische Darstellung der offenbarten Transportvorrichtung gemäß der zweiten Ausführungsform.

### Ausführungsformen der Erfindung

Gleiche Bezugszeichen bezeichnen in allen Figuren gleiche Vorrichtungskomponenten oder gleiche Verfahrensschritte.

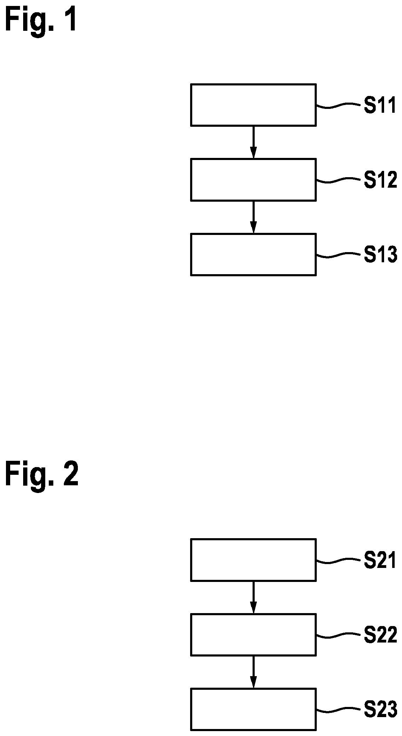

Figur 1 zeigt ein Flussdiagramm des offenbarten Verfahrens zur Herstellung eines Elektrodenstapels für eine elektrische Energiespeichereinheit gemäß einer ersten Ausführungsform. Dabei wird in einem ersten Schritt S11 ein Elektrodenblatt mittels einer Transportvorrichtung aufgenommen. Dies kann beispielsweise mittels einer auf der Transportvorrichtung vorhandenen Saugeinheit erfolgen, welche das Elektrodenblatt durch Erzeugen eines Unterdrucks aufnimmt.

In einem zweiten Schritt S12 wird eine Lage des Elektrodenblattes auf der Transportvorrichtung mittels mindestens eines an oder in der Transportvorrichtung angebrachten Sensors ermittelt. Somit ist die Position des Elektrodenblattes auf der Transportvorrichtung bekannt.

In einem dritten Schritt S13 wird das Elektrodenblatt auf dem Elektrodenstapel abgelegt, wobei in Abhängigkeit der in dem zweiten Schritt S12 ermittelten Lage des Elektrodenblattes eine Korrektur der Ablagelage des Elektrodenblattes auf dem Elektrodenstapel vorgenommen wird. Somit wird ein positionsgenaues Ablegen des Elektrodenblattes auf dem Elektrodenstapel erreicht.

Figur 2 zeigt ein Flussdiagramm des offenbarten Verfahrens zur Herstellung eines Elektrodenstapels für eine elektrische Energiespeichereinheit gemäß einer zweiten Ausführungsform. Dabei wird in einem ersten Schritt S21 ein Elektrodenblatt mittels einer Transportvorrichtung, welche eine Saugeinheit aufweist, durch Ansaugen aufgenommen.

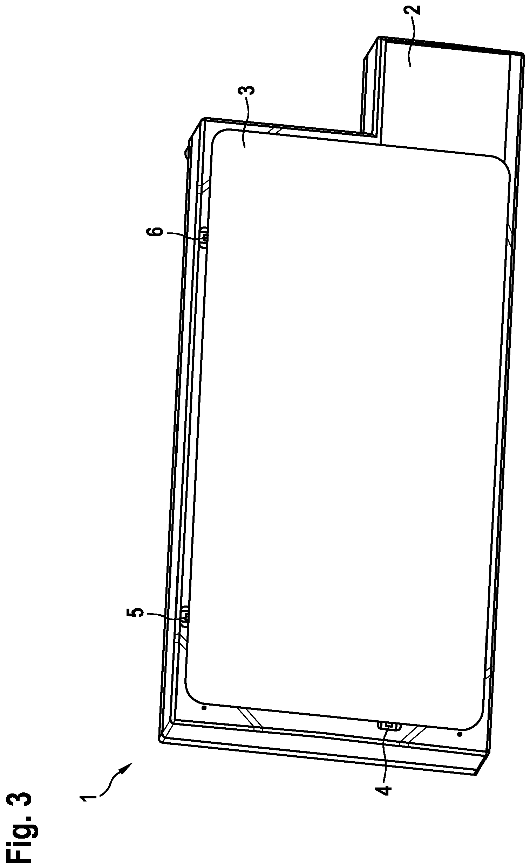

In einem zweiten Schritt S22 wird die Lage zweier Kanten des Elektrodenblattes mittels dreier nicht auf einer Gerade liegenden, in der Transportvorrichtung angebrachten Zeilensensoren ermittelt. Dazu kann beispielsweise die in den Figuren 3, 4 und 5 gezeigte Transportvorrichtung eingesetzt werden. Somit wird zum einen eine laterale Position wie auch eine Verdrehung des Elektrodenblattes ermittelt.

Diese Lageinformation wird anschließend in einem dritten Schritt S23 dazu verwendet, beim Ablegen des Elektrodenblattes auf dem Elektrodenstapel eine Korrektur der Ablagelage des Elektrodenblattes auf dem Elektrodenstapel durchzuführen. Diese Korrektur der Ablagelage umfasst gegebenenfalls eine Korrektur einer Verdrehung und einer lateralen Ausrichtung des Elektrodenblattes auf dem Elektrodenstapel, welche während des Ablagevorgangs beziehungsweise eines Transportvorganges durch die Transportvorrichtung vorgenommen wird.

Figur 3 zeigt eine erste schematische Darstellung der offenbarten Transportvorrichtung 1 gemäß einer ersten Ausführungsform. Dabei weist die Transportvorrichtung 1 eine Saugeinheit 2 auf. Weiterhin ist ein auf der Transportvorrichtung 1 vorhandenes Elektrodenblatt 3 abgebildet, welches durch die Saugeinheit 2 in seiner Position gehalten wird. Ein erster Zeilensensor 4 ist in einer Vertiefung auf der das Elektrodenblatt aufnehmenden Seite der Transportvorrichtung 1 angeordnet. Des Weiteren sind ein zweiter Zeilensensor 5 und ein dritter Zeilensensor 6 in einer entsprechenden Vertiefung auf der Transportvorrichtung 1 angebracht.

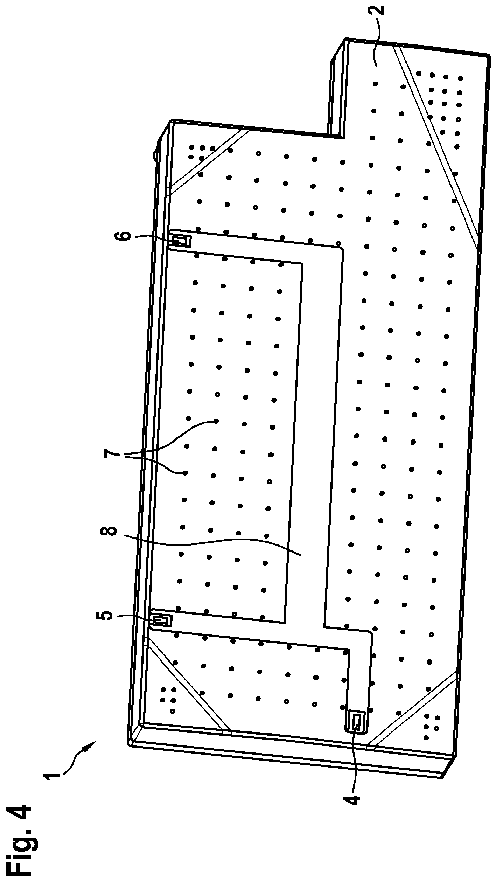

Figur 4 zeigt eine zweite schematische Darstellung der offenbarten Transportvorrichtung gemäß der ersten Ausführungsform. Dabei ist im Gegensatz zur Darstellung in Figur 3 das Elektrodenblatt 3 nicht abgebildet. Insbesondere ist deutlich zu erkennen, wie die Zeilensensoren 4, 5 und 6 in den entsprechenden Vertiefungen 8 der Transportvorrichtung angebracht sind. Weiterhin sind Löcher 7 der Saugeinheit 2 dargestellt, welche dazu dienen, einen Unterdruck zu erzeugen und somit das Elektrodenblatt 3 aufzunehmen beziehungsweise in seiner Position auf der Transportvorrichtung 1 zu halten. Die entsprechenden Vertiefungen 8 können dabei alternativ auch nicht miteinander verbunden sein, sondern jeweils nur derart ausgebildet, dass sie genau den entsprechenden Zeilensensor 4, 5 oder 6 aufnehmen.

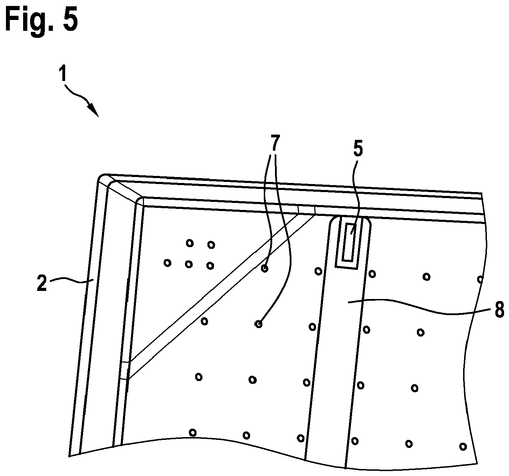

Figur 5 zeigt eine schematische Darstellung eines Ausschnitts der offenbarten Transportvorrichtung 1 gemäß der ersten Ausführungsform. Hier sind die entsprechenden Löcher 7 der Saugeinheit 2, welche den Unterdruck erzeugen, nochmals deutlich zu erkennen. Ebenso wird deutlich, dass die Löcher 7 in einem regelmäßigen Muster angeordnet sind, um einen entsprechend gleichmäßigen Unterdruck zum Ansaugen des Elektrodenblattes 3 zu erzeugen. Alternativ können die Löcher 7 auch unregelmäßig beziehungsweise in einem anderen als dem abgebildeten Muster angeordnet sein. Weiterhin zeigt Figur 5, dass die Zeilensensoren 4, 5 und 6 im Randbereich der Transporteinheit 1, insbesondere im Kantenbereich, angeordnet sind, um durch eine entsprechende teilweise Überdeckung durch das Elektrodenblatt 3 eine Lage des Elektrodenblattes 3 auf der Transportvorrichtung 1 ermitteln zu können.

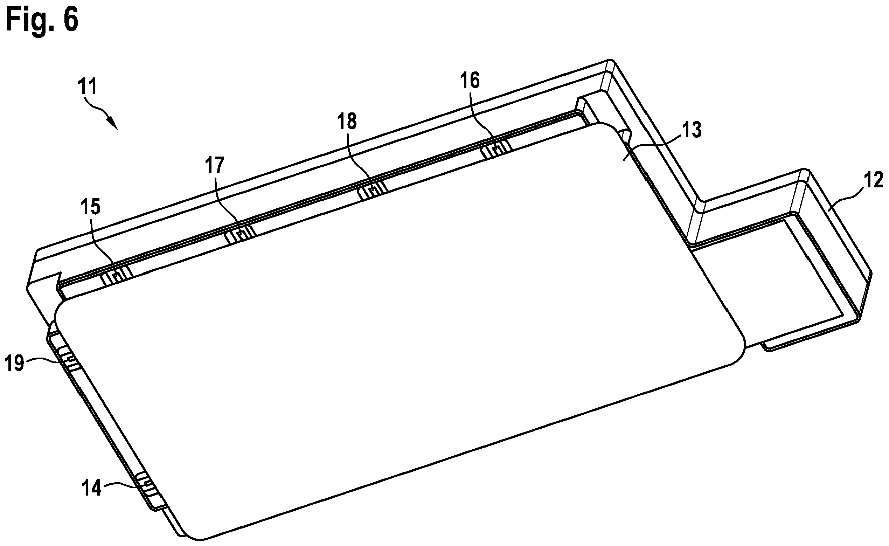

Figur 6 zeigt eine erste schematische Darstellung der offenbarten Transportvorrichtung 11 gemäß einer zweiten Ausführungsform. Dabei weist die Transportvorrichtung 11 eine Saugeinheit 12 auf. Weiterhin ist ein auf der Transportvorrichtung 11 vorhandenes Elektrodenblatt 13 abgebildet, welches durch die Saugeinheit 12 in seiner Position gehalten wird. Ein erster Zeilensensor 14 und ein zweiter Zeilensensor 19 sind in einer Vertiefung auf der das Elektrodenblatt aufnehmenden Seite der Transportvorrichtung 11 angeordnet. Des Weiteren sind ein dritter Zeilensensor 15, ein vierter Zeilensensor 16, ein fünfter Zeilensensor 17 und ein sechster Zeilensensor 18 jeweils in einer entsprechenden Vertiefung auf der Transportvorrichtung 11 angebracht. Durch die Verwendung einer erhöhten Anzahl an Zeilensensoren wird die Genauigkeit erhöht.

Alternativ beziehungsweise zusätzlich ist es möglich, auch auf den entsprechenden gegenüberliegenden Seite, die in den Figuren 3, 4, 6 und 7 noch ohne Sensoren sind, ebenfalls entsprechende Sensoren anzubringen. Dies hat den Vorteil, dass man die Mitte des Elektrodenblattes erfassen kann und somit ein mittiges Ablegen auf einem entsprechenden Elektrodenstapel vereinfacht wird.

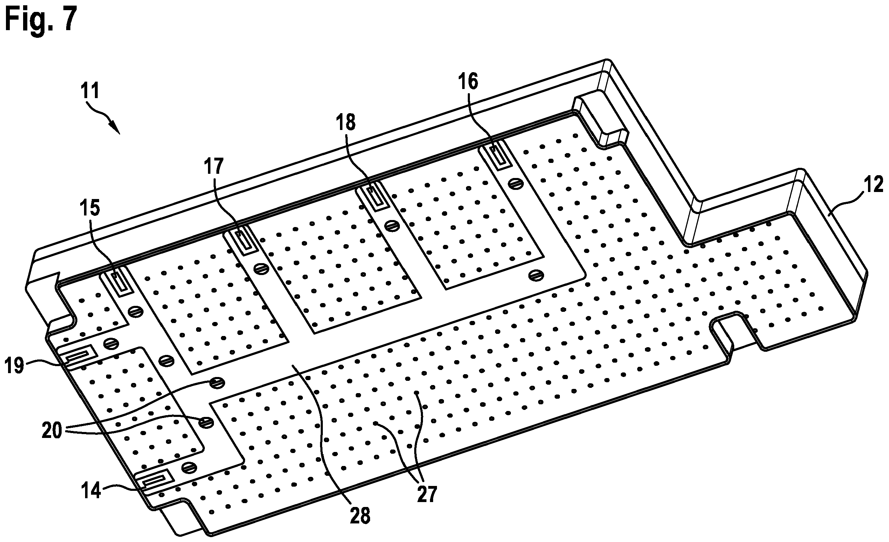

Figur 7 zeigt eine zweite schematische Darstellung der offenbarten Transportvorrichtung gemäß der zweiten Ausführungsform. Dabei ist im Gegensatz zur Darstellung in Figur 6 das Elektrodenblatt 13 nicht abgebildet. Insbesondere ist deutlich zu erkennen, wie die Zeilensensoren 14, 15, 16, 17, 18 und 19 in entsprechenden Vertiefungen der Transportvorrichtung angebracht sind, um eine ebene Ablagefläche für das Elektrodenblatt 13 zu ermöglichen. Eine Abdeckung 28 deckt dabei entsprechende Känale ab, in denen beispielsweise zu den Zeilensensoren 14, 15, 16, 17, 18 und 19 gehörende Kabel für die Stromversorung beziehungsweise den Datentransfer verlegt sind und ermöglicht somit ebenfalls die Ebenheit der Ablagefläche des Elektrodenblattes 13. Diese Abdeckung wird durch Schrauben 20 in Position gehalten. Weiterhin sind Löcher 27 der Saugeinheit 12 dargestellt, welche dazu dienen, einen Unterdruck zu erzeugen und somit das Elektrodenblatt 13 aufzunehmen beziehungsweise in seiner Position auf der Transportvorrichtung 11 zu halten.

## Patentansprüche

1. Verfahren zur Herstellung eines Elektrodenstapels für eine elektrische Energiespeichereinheit, umfassend die Schritte:
a) Aufnehmen eines Elektrodenblattes (3, 13) mittels einer Transportvorrichtung (1, 11);
b) Ermitteln einer Lage des Elektrodenblattes (3, 13) auf der Transportvorrichtung (1, 11) mittels mindestens eines an oder in der Transportvorrichtung (1, 11) angebrachten Sensors (4, 5, 6, 14, 15, 16, 17, 18, 19);
c) Ablegen des Elektrodenblattes (3, 13) auf einem Elektrodenstapel, wobei eine Korrektur der Ablagelage des Elektrodenblattes (3, 13) auf dem Elektrodenstapel in Abhängigkeit der ermittelten Lage des Elektrodenblattes (3, 13) auf der Transportvorrichtung (1, 11) vorgenommen wird, um ein positionsgenaues Ablegen des Elektrodenblattes (3, 13) auf dem Elektrodenstapel zu ermöglichen.

2. Verfahren gemäß Anspruch 1, wobei der Schritt b) des Ermittelns der Lage des Elektrodenblattes (3, 13) ein Ermitteln einer Lage mindestens einer Kante des Elektrodenblattes (3, 13) auf der Transportvorrichtung (1) mittels mindestens zweier an oder in der Transportvorrichtung (1) angebrachter Sensoren (4, 5, 6, 14, 15, 16, 17, 18, 19), insbesondere Zeilensensoren (4, 5, 6, 14, 15, 16, 17, 18, 19), umfasst.

3. Verfahren gemäß Anspruch 2, wobei das Ermitteln der Lage mindestens zweier Kanten des Elektrodenblattes (3, 13) mittels mindestens dreier nicht auf einer Gerade liegenden, an oder in der Transportvorrichtung (1, 11) angebrachter Sensoren (4, 5, 6, 14, 15, 16, 17, 18, 19) durchgeführt wird.

4. Verfahren gemäß einem der vorhergehenden Ansprüche, wobei aus der in Schritt b) ermittelten Lage eine Verdrehung des Elektrodenblattes (3, 13) ermittelt wird.

5. Verfahren gemäß Anspruch 4, wobei in dem Schritt c) des Ablegens das Elektrodenblatt (3, 13) in Abhängigkeit der ermittelten Verdrehung so abgelegt wird, dass eine Lageabweichung zwischen dem Elektrodenblatt (3, 13) und einem weiteren auf dem Elektrodenstapel bereits vorhandenen Elektrodenblatt minimiert wird.

6. Verfahren gemäß einem der vorhergehenden Ansprüche, wobei der Schritt a) des Aufnehmens ein Ansaugen des Elektrodenblattes (3, 13) durch die Transportvorrichtung (1, 11) umfasst.

7. Transportvorrichtung (1, 11) zum Herstellen eines Elektrodenstapels, wobei die Transportvorrichtung (1, 11) eine Einheit zum Aufnehmen eines Elektrodenblattes (3, 13) umfasst, insbesondere eine Saugeinheit (2, 12), **dadurch gekennzeichnet, dass** die Transportvorrichtung (1, 11) eine Einheit zum Ermitteln der Lage des Elektrodenblattes (3, 13) auf der Transportvorrichtung (1, 11) umfasst.

8. Transportvorrichtung (1, 11) gemäß Anspruch 7, **dadurch gekennzeichnet, dass** die Einheit zum Ermitteln der Lage mindestens einen Sensor (4, 5, 6, 14, 15, 16, 17, 18, 19), insbesondere einen Zeilensensor (4, 5, 6, 14, 15, 16, 17, 18, 19), umfasst.

9. Transportvorrichtung (1, 11) gemäß Anspruch 8, **dadurch gekennzeichnet, dass** die Transportvorrichtung (1, 11) mindestens drei Sensoren (4, 5, 6, 14, 15, 16, 17, 18, 19), insbesondere drei Zeilensensoren (4, 5, 6, 14, 15, 16, 17, 18, 19), umfasst, welche so angeordnet sind, dass sie nicht auf einer Gerade liegen.

10. Transportvorrichtung (1, 11) gemäß Anspruch 9, **dadurch gekennzeichnet, dass** die Sensoren (4, 5, 6, 14, 15, 16, 17, 18, 19) so angeordnet sind, dass sie mindestens zwei Kanten eines aufzunehmenden Elektrodenblattes (3, 13) erfassen.

11. Transportvorrichtung (1, 11) gemäß einem der Ansprüche 8 bis 11, **dadurch gekennzeichnet, dass** der mindestens eine Sensor (4, 5, 6, 14, 15, 16, 17, 18, 19) in einer Vertiefung (8) auf einer das Elektrodenblatt (3, 13) aufnehmenden Seite der Transportvorrichtung (1, 11) angebracht ist.

12. Computerprogramm, umfassend Befehle, die bewirken, dass die Transportvorrichtung (1, 11) nach einem der Ansprüche 7 bis 11 die Verfahrensschritte nach einem der Ansprüche 1 bis 6 ausführt.

13. Maschinenlesbares Speichermedium, auf dem das Computerprogramm nach Anspruch 12 gespeichert ist.
